(19) Europäisches Patentamt
European Patent Office
Office européen des brevets

(11) Publication number: 0 193 816 A2

(12) # EUROPEAN PATENT APPLICATION

(21) Application number: 86102301.8

(22) Date of filing: 21.02.86

(51) Int. Cl.⁴: G 06 F 15/20

(30) Priority: 22.02.85 US 704656

(43) Date of publication of application: 10.09.86 Bulletin 86/37

(84) Designated Contracting States: AT BE CH DE FR GB IT LI LU NL SE

(71) Applicant: PROFIT TECHNOLOGY, INC., 39 Broadway, New York New York 10006 (US)

(72) Inventor: Rogers, Alan L., 347 West 48th Street Apt. 5C, New York New York 10036 (US)
Inventor: Bedrij, Orest W., 14 Washington Place, New York New York 10003 (US)

(74) Representative: Hoeger, Stellrecht & Partner, Uhlandstrasse 14c, D-7000 Stuttgart 1 (DE)

(54) **Thought triggering and amplification system.**

(57) A set of triggering actions or thought amplification mechanisms are provided for bringing the human mind to an enhanced state of concentration and awareness which is receptive to unstructured inputs and outputs for findings and externalizing solutions and thoughts relating to decision making, problem solving, learning, remembering, creativity, and psychotherapy. Before receiving the triggering signals, the user is placed in a controlled environment conducive to higher concentration and reinforcement of thought patterns or neuron structure excited by the triggering actions. In a specific embodiment, a computer is provided for control of the triggering actions, thought amplification and environment, and for conducting an unstructured question-and-response dialog with the user for externalizing thoughts which are selectively recorded. Triggering mechanisms may incorporate sound, rhythm, images, repetition, touching, and smell.

EP 0 193 816 A2

0193816

S P E C I F I C A T I O N

To all whom it may concern:

Be it known that We, ALAN L. ROGERS, OREST J. BEDRIJ and OREST W. BEDRIJ, citizens of the United States of America, residing at New York, County of New York, State of New York; Poughkeepsie, County of Dutchess, State of New York; and New York, County of New York, and State of New York, respectively, have invented a certain new and useful THOUGHT TRIGGERING AND AMPLIFICATION SYSTEM, of which the following is a specification.

36bd-ldp

## Background of the Invention

### 1. Technical Field

The present invention generally relates to decision making, problem solving, learning, remembering, understanding, creativity, introspection, concentration, psychotherapy, human capabilities enhancement, and applied artificial intelligence.

### 2. Description of the Related Art

It is well known that when a subject is awake, he or she will remember more information than when the subject is asleep. Further, it is well known that information learned can most easily be recalled when the mind is focused than when the mind is unfocused. Also, it is well known that information learned, when the mind is in a particular state of consciousness, is most easily remembered when the mind resumes that particular state of consciousness. For example, a person who is physically present at and saw the Grand Canyon, will even, 50 years later, remember more details upon returning to the Grand Canyon than trying to recall the details from memory. Also, it is known that a person can learn and remember more information in pleasant surroundings than in an unpleasant hostile environment. Further, it is known that a person will learn and remember better when more senses are energized at the same time, i.e., seeing and hearing together has greater impact upon memory than either alone. Further, it is known that the mind through the power of association of known parts and figures can create new solutions, inventions, and make discoveries.

## Summary of the Invention

The primary object of the invention is to increase a person's ability to achieve greater concentration and association of facts, figures, and ideas, and to increase the mind's thought triggering, amplification, and awareness. In this regard, a related object of the invention is to to facilitate access to and use of a greater portion of the human capacities and capability.

Another object of the invention is to improve a person's problem solving and decision making ability.

Yet another object of the invention is to increase creativity.

Still another object of the invention is to enhance learning.

Moreover, another object of the invention is to enable a person to access deeper levels of the mind.

And yet another object of the invention is to improve one's psychological health and effectiveness.

And yet another object of the invention is to improve the amplification of the human thought triggering process.

In accordance with the broadest aspect of the invention, a thought triggering and amplification system provides a set of triggering actions or mechanisms for extending the bandwidth of human awareness including a deep level of mental concentration which is receptive to unstructured inputs and outputs for finding and externalizing thoughts and accessing untapped human capacities. Means are also provided for defining an environment conducive to concentration and reinforcement of the thought patterns or neuron structure developed by repetitive use of the thought triggering and amplification system.

In a specific embodiment, a computer, a high fidelity sound system, a color generator, and a background image projector are provided for control of the thought triggering actions and amplification and for conducting an unstructured question-and-response dialog with a user for externalizing thoughts and solutions relating to decision making, problem solving, learning, creativity, introspection, and psychotherapy. The externalized thoughts and solutions are selectively recorded. In addition to the question-and-response format, the computer coordinates a plurality of other triggering mechanisms such as rhythm, images, sound, repetition, and touching. Moreover, the computer may help set up an environment conducive to mental concentration by selecting or controlling background music, color, fragrance, temperature, and humidity. For this purpose the computer may be interfaced to a number of additional devices such as a high-fidelity sound system, an image projector, a color generator or controlled lighting system, a fragrance generator, and a temperature or humidity controller. Preferably the environment is further defined by selection of the ambience or location where the computer is used, the attire or clothing worn by the user, the physical state of the user as established by breathing exercises and stillness, the time or frequency with which the computer is used, and the social setting or community of persons using the computer-controlled system.

The computer is preferably programmed to conduct an interactive session with at least one user including a number of steps in a certain sequence for reaching successively deeper levels of a user's awareness. According to a preferred sequence, the computer gives an explanation or introduction of the system to the user. Then the computer requests the user's name; the challenge, question or problem that the user would like to solve; a file name; and the present date for future reference of the particular dialog. To bring the user to a higher state of concentration, the user is offered a selection of specific procedures or techniques including, for example, a set of thought triggers, relaxation methods, and confidence of success exercises. Then the computer conducts an unstructured question and response dialog with the user for externalizing solutions and other thoughts. A record of the dialog is selectively recorded or stored in the computer for future reference. At the end of the interactive session, or at any later date, the record of the dialog may be edited or erased at the user's option.

## Brief Description of the Drawings

Other objects and advantages of the invention will become apparent upon reading the following detailed description and upon reference to the drawings, in which:

Figure 1 is a perspective view of the present invention being used in a social environment;

Fig. 2 is a schematic diagram of one of the color generators shown in Fig. 1;

Fig. 3 is a schematic diagram of one of the fragrance generators shown in Fig. 1;

Fig. 4 is a general flow chart of the preferred procedure to carry out a dialog or decision making process in accordance with one method of the present invention;

Fig. 5 is as a specific flow chart of an executive procedure executed by the computer of Fig.

1 to carry out the dialog or decision making process of Fig. 4;

Fig. 6 is a view of a menu screen presenting options to the user;

Figs. 7A and 7B comprise a flow chart of a procedure executed by the computer of Fig. 1 to conduct a dialog with the user and present a number of problem solving techniques;

Fig. 8 is a flow chart of a procedure for presenting two levels of relaxation techniques;

Fig. 9 is a flow chart of a procedure for presenting three levels of "confidence of success" techniques; and

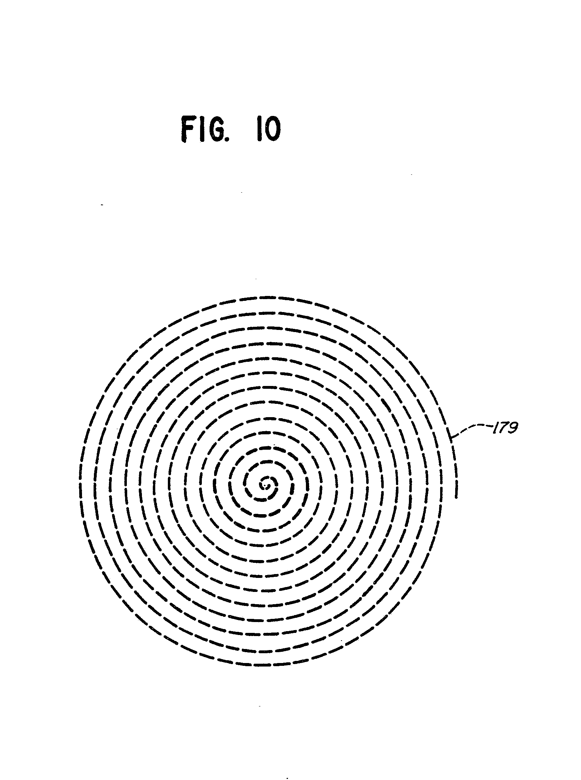

Fig. 10 is a pictorial view of one thought triggering display generated by the computer shown in Fig. 1.

While the invention is susceptible to various modifications and alternative forms, a specific embodiment thereof has been shown by way of example in the drawings, and will herein be described in detail. It should be understood, however, that it is not intended to limit the invention to the particular form disclosed, but, on the contrary, the intention is to cover all modifications, equivalents and alternatives falling within the spirit and scope of the invention as defined by the appended claims.

## DESCRIPTION OF THE PREFERRED EMBODIMENT

Turning now to the drawings, there is shown in Fig. 1 a perspective view of a computer system for use in generating a large set of triggering actions or mechanisms for extending the bandwidth of human perception and improving the amplification of the human thought triggering process, thus bringing the human mind to an enhanced state of awareness including a higher level of concentration for finding, amplifying and externalizing solutions and thoughts relating to decision making, problem solving, learning, remembering, creativity, and psychotherapy. The computer system includes a general-purpose digital computer 20 including a memory 21 and having a display or output unit 22 and a keyboard or input unit 23 for communicating with a first user 24. A voice recognizer and voice synthesizer could be used for input and output, although at the present time these components are not cost competitive with displays and keyboards. The computer 20 also controls a slave terminal 25 for communicating with a second user 26. The computer 20 is, for example, a microcomputer such as an IBM or Apple personal computer.

Before receiving the triggering actions from the computer 20, the users 24, 26 are placed in a controlled environment or ambience conducive to mental concentration, enhanced thought triggering, amplification, and energizing. Preferably, this environment is controlled or selected in part by the computer 20. As shown in Fig. 1, the users 24, 26 are placed in a room generally designated 27 having controlled seating arrangements, background music, color, fragrance, temperature, and humidity. The background music is provided by a high-fidelity sound system including stereo speakers 28 and 29 and an audio disk unit or player 30. Due to the 60 beats per minute rhythms present in classical, baroque and certain other music, it is preferred for setting up an environment conducive to mental concentration. In order to set an ambient color or lighting in the room 27 to suit the particular users 24, 26, the lighting system employs color generators 31 and 32. A background image projector 33 such as a slide projector or video disk system is used to set up an aesthetically pleasing image such as a landscape, color graphics, or images of items to be triggered for the desired solution on at least one of the walls 34 of the room 27. In a particular case, for example, users were presented with photographs of the inside of a bank to focus their attention and trigger recall of banking operations. Their recall of banking operations was used to help design a computer program for improving banking operations. Temperature or humidity controllers 35, 36 insure that the temperature and humidity in the room 27 are set to comfortable values for the users 24, 26. To set a particular mood in the room 27, the temperature/humidity controllers 35, 36 are provided with fragrance generators 37, 38.

The environment for the users 24, 26 is further defined by the attire or clothing 39, 40 worn by the users 24, 26 as well as the physical state of the users as established by breathing exercises and relaxation, the time or frequency with which the computer is used, and the social setting or community of the persons using the computer 20.

It is important that the users 24, 26 should wear comfortable clothing 39, 40 but the clothing is preferably clothing set aside for use only during the thought trigger process with the computer 20. The attire or clothing 39, 40 is obviously a matter of personal choice, but it should create a mental attitude in the users which is externalized in positive action and feeling of achievement. The clothing or attire 39, 40 should put the user in a happy frame of mind and confidence of success. Typically the thought triggering, amplification, and energizing can become more pronounced when a particular set of clothing, beautiful music, chair, color images, and ambience is set aside and used only for sessions with the computer 20. Then the particular attire or clothing 39, 40, music, chair and images will reinforce the triggering actions or amplification generated by the computer 20 to put the users 24, 26 in the enhanced mental state of awareness characterized by deep concentration.

The physical state of the users 24, 26 is also important for achieving the desired level of mental concentration. The users 24, 26 must relax both mentally and physically to go into higher and higher states of awareness. Proper rest and diet is conducive to physical relaxation and mental concentration. Also, the use of tranquilizers, sleeping pills, and alcohol is counter-productive to achieving greater mental concentration and awareness. Before using the computer 20 for the thought triggering process, the users 24 and 26 should close their eyes and lay aside all of their anxieties such as business and personal cares. Then, they should continuously relax their feet, lungs, chest, shoulder blades and back. Then, they should relax their arms, neck, eyes and head. Finally, the entire body should be relaxed so that it feels totally at rest. Once relaxed, the users 24, 26 should quietly focus their attention on breathing. Instead of breathing rapidly and taking in little air, they should breathe in deeply, filling their lungs slowly and evenly, trying not to pause. The time spent exhaling should be about the same time as that spent inhaling.

The users 24, 26 should preferably use the computer 20 for an interactive thought triggering process on a regular basis, at the same time of day. Repeated and regular use of the system enhances its desirable effect. Moreover, at least until the users 24, 26 are totally familiar with the system, it is preferably used in a social setting where the users can give themselves mutual assurances.

Once the users 24, 26 have brought themselves to the proper physical and mental state by practicing breathing exercises and relaxation, the computer 20 starts a sequence of triggering actions or mechanisms tending to bring the users 24, 26 to a higher level of mental concentration and awareness. These triggering actions, for example, include the touching of the computer keyboard, the display of thought triggering graphics on the display 22 and on the corresponding display 41 of the slave terminal 25. In addition to thought triggering graphics, the computer 20 controls a sound generator 42 to generate thought triggering sounds synchronized with the thought triggering graphics on the displays 22, 41. Moreover, the computer 20 may also synchronize the thought triggering graphics and sounds with the background music from the audio disk unit 30, the intensity of the color generators 31, 32, and even the selection of images generated by the background image projector 33. Typically, in the United States the displays 22 and 41 on the computer 20 and slave terminal 25 include the combination of two factors -- the 60 cycle-per-second pulsing, and the 15,750 per-second scanning of the monitor or television image -- serving as additional thought-triggering mechanisms that enhance concentration, association of facts and facilitate access to and use of a greater portion of the user's capabilities and abilities.

Further, the electron beam forming each pixel (or image dot) on the television screen or monitor showing the display from the computer, is "scanned" or moved from the top of the screen, left-to-right and top-to-bottom at a rate of 525 times per frame. Also, the sound generator 42, for example, is excited at the 60 hertz rate or a submultiple thereof. Moreover, the rhythm of the background music generated by the audio disk unit 30 may be synchronized to a submultiple of this 60 hertz frequency, and similarly the intensity of the color generators 31, 32 or the amplitude of the background music may be modulated at a subharmonic of this 60 hertz frequency. The background music can be, for example, baroque or classical music having a beat of approximately 55-65 beats to the minute. Ocean waves could be substituted for the background music. As will be described further below, the thought triggering graphics generated by the computer 20 preferably comprises a pattern that periodically changes at a rate which is a subharmonic of the 60 hertz frequency, thereby amplifying the thought triggering process.

Turning now to Fig. 2, there is shown a detailed schematic of one of the color generators 31, 32. The color generator includes a replaceable color wheel filter 43 including individual sectors 44 transmitting particular colors. The color of the lighting in the room 27 (Fig. 1) is determined by the particular sector indexed with an incandescent lamp 45. To provide computer controlled selection of the desired color, the color wheel filter 43 is mounted on the shaft 46 of a stepping motor 47 stepped forward or reverse by the computer 20. So that the computer may sense which particular sector 44 is indexed with the lamp 45, a pickup device 48 resolves the angular position of the shaft 46 and generates a digital color selection signal 49 fed back to the computer 20.

Turning now to Fig. 3, there is shown a schematic diagram of one of the fragrance generators 37, 38. The fragrance generator includes a plurality of fragrance solutions 50 stored in a plurality of fragrance bottles 51. Each bottle 51 has an associated atomizer generally designated 52 including a venturi 53. The atomizers 52 have outlet tubes 54 directing the atomized fragrance to the output air stream 55 of a blower 56. The blower 56, for example, is a blower in one of the temperature/humidity controllers 35, 36 (see Fig. 1).

To selectively activate the atomizers 52 to generate a weighted combination of the fragrance solutions for specific thought triggering effects, each atomizer 52 has a respective electronic valve 57 for supplying pressurized gas to the respective venturi 53 of a respective atomizer 52. The electronic valve 57 is, for example, a miniature electronic valve type EV-3M manufactured by Clippard Instrument Laboratory, Inc., 7390 Colerain Road, Cincinnati, Ohio 45239. The electronic valves 57 are designed to be screwed into a common manifold 58 which, as shown in Fig. 3, is secured to a traverse bar 59 to which the atomizers 52 are mounted. The electronic valves 56 are selectively energized by respective select fragrance signals received from the computer 20. As shown in Fig. 3, the source of pressurized gas is a freon canister 61 although compressed air from a small air compressor could be used instead.

Turning now to Fig. 4, there is shown a flow chart generally designated 70 of the preferred procedure to carry out a dialog or decision making process in accordance with one method of the present invention. In step 71 the computer 20 displays an explanation or introduction to the user. Then, in step 72, the computer requests the user's name; the challenge, question or problem that the user would like to solve; a file name; and the present date for future reference of the particular dialog. This information is received by the computer in step 73 in order to identify the current dialog or decision making process between the computer and the user.

As described further below, the dialog is recorded in the memory 21 of the computer 20 for future reference, and it is recorded under the file name so that the user can selectively review or erase the record of a selected dialog stored in computer memory.

Next, in step 74, to bring the user to a higher state of concentration, the user is offered a selection of specific procedures or techniques including, for example, a set of thought triggers, relaxation methods, and confidence of success exercises. Then, in step 75, the computer solicits from the user the challenge or question in detail. The challenge or question is received and recorded in step 76.

The purpose of requesting the user to generate a question or problem is to provide creative stimulation of the thought process. After asking the question or stating the problem, the mind can step aside mentally or psychologically and allow the answers or solutions to come to the surface. The externalized thoughts can then be conveyed by one's hands to the keyboard 23 and recorded by the computer 20 in the memory 21. In step 77 the computer solicits this answer or a response from the user. The answer or response is received and recorded in step 78.

It should be noted that the question/response format is unstructured and it may take some time for a user to become familiar with the process. Once the process takes hold, however, a creative flow or dialog is established. The user may first ask, for example, "What question should I ask?" The subconscious or creative part of the mind may respond and tell the user what questions to ask. The question/response format, in other words, eliminates the need for the computer to anticipate specific questions that should be asked the user. In the beginning, short questions and answers typically flow from the mind until the mind begins to focus more clearly on the specific problem to be solved.

After recording one or more sets of questions and answers, in step 79 the computer offers the user the option of reviewing or erasing the record of the dialog. The user's selection is received in step 80. If the user selects a particular record for review, as tested in step 81, then in step 82 the selected record is displayed. If the user selects a particular record to be erased, as sensed in step 83, then in step 84 the selected record is erased.

The full significance of the particular steps in the general procedure 70 will become clear upon consideration of a specific embodiment. Turning now to Fig. 5, there is shown a flow chart of an executive procedure 90 for controlling the interaction of the computer 20 with the users 24, 26, of Fig. 1. The specific program or procedure is called "Breakthrough"™. A number of the displays or screens generated by this particular program are listed in the appendix to the specification, and are referred to in the specific steps of the flow charts in Figs. 5-9.

In the first step 91 the computer displays Screen #1, which is an introduction to the Breakthrough™ system. Then in step 92 Screen #2 is displayed to welcome the user and, if it is the first time that the user has used the program, to obtain the user's first name. In step 93 Screen #3 is displayed to explain to the user the general objective of the Breakthrough™ system. It is said that the Breakthrough™ system will help the user maximize his or her opportunities, increase his or her success and give him or her new ways of gaining more time and energy to pursue his or her business, personal, and educational objectives. In step 94 Screen #4 is displayed to solicit in general the challenge or question from the user.

In order to obtain the date and file name under which the dialog is recorded, in step 96 Screen #5 is displayed to solicit a file name and the present date from the user. Then, in step 97, the computer displays the main menu Screen #6. For the reader's convenience, this main menu screen is also included as Fig. 6 of the drawing figures. The main menu includes a number of options which can be selected by the user.

After the selection of an option, the computer displays one or more screens associated with the option and may solicit particular information from the user. During the processing of any of these options, the user can return to step 97 and the main menu of Fig. 6 at any time by pressing the return key on the computer or slave terminal. The user can alternatively enter questions and answers by pressing the "Q" key or "A" key, respectively. By pressing the "S" key, the dialog can be permanently stored. By the pressing the "P" key, the dialog can be printed in hard copy. By pressing the "H" key, the user can obtain further instructions on how to enter requested information, why information is being requested, what the Breakthrough™ program is attempting to accomplish, or how information obtained from the user is being used. By pressing the "E" key, a recorded dialog can be edited, or in particular selectively erased. By pressing the "X" key, the user may exit the Breakthrough™ program and return to the monitor or system level program of the computer.

By pressing the "T" key the computer executes the main sequence of presenting problem solving techniques to the user. This main sequence includes a number of subprocedures or subroutines which are individually accessed by selection of the other main menu options, as further described below. The problem solving techniques include, for example, two levels of relaxation techniques and three levels of confidence of success techniques. By pressing the function keys F-1 or F-2, level one or level two of the relaxation techniques, respectively, are selected. By pressing the function keys F-5, F-6, or F-7, levels one, two, or three of the confidence of success techniques, respectively, are selected. The user's selection is received in step 98 and execution selectively jumps in step 99 to the subroutine or entry point associated with the option or key selected by the user.

Turning now to Figs. 7A and 7B, there is shown a flow chart of the main sequence or procedure 100 of problem solving techniques. In step 101 Screen #7 explains this sequence as a set of thought triggers which are said to greatly enhance concentration, creative dynamics, and problem solving capacity. In step 102 Screen #8 is displayed which says that sometimes the answer will surface to the top even before all of the triggers are engaged. In step 103 Screen #9 is displayed which says that trigger #1 is "no interruptions." In step 104 Screen #10 is displayed which says that trigger #2 is "breakthrough music" which has the power to reduce tension, strain and boredom. The user is told to turn on the breakthrough music. Alternatively, in this step the computer could automatically turn on selected music. In step 105 Screen #11 is displayed saying that trigger #3 is "breakthrough attire" which is said to help create a feeling of relaxation, courage and success. Next in step 106 Screen #12 is displayed which says that trigger #4 includes color images which continually reinforce the thought triggering process, creative dynamics, and achievements. The user is told to turn on the color images. Alternatively, the computer could automatically turn on the projection of color images. In step 107 Screen #13 is displayed saying that trigger #5 is a fragrance and color generator. It is said that the energy of rhythm, ambience, beautiful fragrance and color can add vital dimensions to the user's well being and breakthrough success.

In step 108 Screen #14 is displayed, which says that trigger #6 is "clear your supercomputer." Screen #14 introduces two levels of relaxation exercises which the user can select by pressing function key F-1 for level one or function key F-2 for level two. In step 109 the user's response is received. In step 110 the user's response is compared to the code for the F-1 function key. If the user had pressed the F-1 function key, then in step 111 execution jumps to the level one entry point of the relaxation subroutine shown in Fig. 8 and further described below. In step 112 the user's response is compared to the code for the F-2 function key, and if the user had pressed the F-2 function key, then in step 113 execution jumps to the level two entry point of the relaxation subroutine of Fig. 8.

Confidence of success helps a user solve problems. In step 114 Screen #15 is displayed to tell the user to be positive of achievements and confident of success. The user is given the option of selecting one of three further levels for reinforcement of success. The user's response is received in step 115. If the function key F-1 is selected as sensed in step 116, then execution jumps in step 117 to the first level of reinforcement of success. This is the first entry point of the confidence of success subroutine shown in Fig. 9 and described further below. If the function key F-2 is selected as sensed in step 118, then in step 119 execution jumps to the second entry point of the confidence of success subroutine in Fig. 9. Similarly, if the function key F-3 is sensed in step 120 then in step 121 execution jumps to a third entry point of the confidence of success subroutine.

Once the user is confident of success, he or she can undertake the question and answer dialog. In step 122 Screen #16 is displayed to explain the importance of pausing and reflecting on the nature of the user's question. It is said that the questions trigger the memory circuits that have partial or complete answers. The user is requested to type in all the things that come to mind about the challenge or question. In step 123 a partially blank Screen #16A is displayed to facilitate entry of the user's question. The user's response is received in step 124. The user's response may include the "A" key as sensed in step 125, to conclude the entry of the user's question. Otherwise, the user's response is recorded in step 126 and displayed in the blank portion of the Screen #16A. If the Screen #16A becomes full, as tested in step 127, a continuing partially blank Screen #16B is displayed in step 128.

After the user has entered his or her own question, in step 129 Screen #19 is displayed to give an explanation of the importance of the user's answer. On Screen #17, it is said that answers come in two forms, including complete and partial. It is said that the important thing is to start putting down the answer, no matter how seemingly insignificant. The answers that are put down will trigger other answers. Next in step 130 a partially blank Screen #17A is displayed to receive the user's answer. In step 131 the user's response is received and compared in step 132 to the code for the "T" key to sense the end of the answer. The answer is recorded in step 133 and displayed. If the display becomes full as sensed in step 134, a new partially blank Screen #17B is displayed in step 135 for continued entry of the user's answer.

After the user has entered his or her answer, in step 136 Screen #18 is displayed to tell the user to

0193816

"take action" by converting the solution into action and following it through. Finally, in step 137 Screen #19 is displayed to congratulate the user on completing the Breakthrough™ program.

The flow chart in Figs. 7A and 7B for the problem solving techniques procedure 100 includes all of the problem solving techniques and a single question/answer dialog. At any point in this procedure execution returns to the main menu Screen #6 as shown in Fig. 6 and displayed at step 97 of Fig. 5 in response to the user pressing the return key. The user can, for example, press the return key after the display of Screen #18 in step 136 to continue the question and answer dialog by pressing the "Q" key after the main menu screen of Fig. 6 is displayed in step 97. Selection of the "your QUESTION" option causes steps 123-128 of Fig. 7B to be executed. Similarly, selection of the "A" key for the "your ANSWER" option caused steps 130-135 of Fig. 7B to be executed. Selection of the "X" key or EXIT option causes execution to jump to step 137.

The RELAXATION option causes the relaxation subroutine of Fig. 8 to be called. The relaxation subroutine generally designated 140 includes a first level entry point 141. Execution of the first level starts in step 142 with the display of a Screen #14-1A explaining the importance of relaxation. In step 143 a Screen #14-1B tells the user to close his or her eyes for a minute or two and to lay aside all business and personal cares. In step 144 a Screen #14-1C tells the user to conciously relax his or her feet, legs, chest, shoulder blades and back. In step 145 a Screen #14-1D tells the user also to relax his or her arms, neck, eyes and head. The user is told to relax his or her entire body so that he or she feels totally at rest. In step 146 a Screen #14-1E tells the user to repeat to his or herself over and over again the phrase "I am relaxing ... I am recharging ... I am energizing ...." The user is told to think about an event that the user enjoyed or about something that made the user very happy. The user is told to feel the energy of that moment flooding his or her entire being. The user is told to stay with for a few minutes. Next, in step 147, a Screen #14-1F tells the user to quietly focus his or her attention on breathing, and instead of breathing rapidly and taking in little air, he or she should breathe in deeply, filling his or her lungs fully, slowly and evenly, trying not to pause. Finally, in step 148, the user is told to count as he or she inhales or exhales so that the time spent exhaling is about the same as the time spent inhaling. The user is told to breathe evenly, deeply and slowly, to recharge, renew and revitalize so as to feel a happy exuberance within. The user is also given the option of returning to continue with the next trigger #7, or to press the F-2 key for the second level of relaxation exercises. The user's response is received in step 149 and compared in step 150 to determine whether the F-2 key was selected. If so, execution jumps to the second relaxation entry point 151.

In the second level of relaxation, first a Screen #14-2A is displayed in step 152. The user is given a more powerful relaxation exercise and creativity-training technique to concentrate attention on relaxation. Next in step 153 a Screen 14-2B tells the user to close his or her eyes for a minute or two and relax, unwind, and recharge. The user is further told to lay aside all business and personal cares. Continuing in step 154, the user is told to conciously relax his or her feet, legs, chest, shoulder blades and back. In step 155 a Screen #14-2D tells the user also to relax his or her arms, neck, eyes and head. The user is told to relax his or her entire body so that he or she feels totally at rest. Next in step 156 a Screen #14-2E tells the user to repeat to his or herself over and over again, "I am relaxing ... I am recharging ... I am energizing ...." The user is told to think about an event which was enjoyed or about something that made the user very happy. The user is told to feel the energy of that moment flooding his or her entire being. Continuing in step 157, the user is told to still his or her mind like quiet water and focus on that deep reservoir of energy and stay with that feeling. The user is told that when his or her mind begins to wander, slowly steer it back on course. Finally, in step 158 a Screen #14-2G tells the user that his or her mind, like his or her legs, hands or fingers, is subject to his or her will. The user is told to gently hush it; gently tame it; and gently harness it to prolong that good feeling. The user is told to practice this creativity exercise until the user's attention span on PEACE-OF-MIND lengthens to about ten minutes. This completes the relaxation subroutine 140 of Fig. 8.

Turning now to Fig. 9, there is shown a flow chart of a confidence of success subroutine generally designated 160 having three separate entry points. After entry at the first entry point 161, in step 162 a Screen #15-1A introduces the user to a number of reinforcement thoughts that are said to further help the user trigger and amplify his or her best thoughts and solutions to the challenge. The user is told to have absolute confidence of finding the answer to the challenge. The user is told to know positively that he or she can do it. The user is also told to visualize the successful end result. Further, the user is told to trust, have no doubt of success, and not to falter. The user is told not to worry, not to be afraid, and to have courage. Moreover, the user is told to create a strong feeling of success in his or her heart. Finally, the user is told to trust in his or her ability to be able to do the job. In conclusion, the user is told to press the space bar to return and continue with the next trigger #8, or to press the F-6 function key before moving on to level two of the confidence of success subroutine 160. In step 163 the response from the user is received and in step 164 the response is compared to the code for the function key F-6 to determine whether to return or to move on to the second level.

Upon entry at the second level entry point 165, in step 166 a Screen #15-2A tells the user that a number of following screens will show affirmation examples. The user is also told that to make the affirmation examples more personal, the user can type in his or her own statements by following a special programming sequence to build a personal triggering routine. The user is told to press the space bar to terminate the display of the screens and continue with the presentation of the affirmation examples; or to press the F-10 function key to execute the personal triggering routine; or to press the F-7 function key for dropping to level three of the confidence of success subroutine 160. In step 167 the user's response is received for comparison in step 168 to the code for the F-10 function key. If the F-10 function key was selected, then in step 169 the preprogrammed personal triggering routine is called. Otherwise, in step 170 the user's response is compared to the code for the F-7 function key and if there is a match execution jumps to the level three entry point 171. Otherwise, execution proceeds to step 172 with the display of affirmation examples as listed in Screen #15-2B. In practice not all of the affirmation examples shown are displayed at the same time. Rather a few and preferably just one of the affirmation examples are flashed to the user at any given time. Each is successively and individually displayed for about one second and the display continues until the user presses the space bar to continue. The space bar is sensed in step 173 whereupon execution returns to the calling program. It should be noted that the personal triggering routine 169 is preferably similar to the flashing of affirmation examples as described above, except that the user can preselect or preprogram the affirmation examples which are successively shown.

Upon entry at the third level entry point 171, in step 174 a Screen #15-3A tells the user to watch a number of following screens until the user is ready to go on to trigger level 8. The user is told to press the space bar to continue, or to press the F-10 function key for the personal triggering format. The third level of confidence of success presents a number of attention gathering graphical patterns. These patterns are either preprogrammed or may be specified by the user's personal triggering routine 169. In step 175 the user's response is received and in step 176 it is compared to the code for the F-10 function key to determine whether the personal triggering routine should be called. If not, in step 177 the preprogrammed graphics are selected and displayed. Screen #15-3B presents a menu of graphical patterns to the user including slow, medium and fast random patterns; a moire pattern, a spiral or bullseye pattern, and slow and fast pulsing patterns. The user selects the desired pattern by entering a corresponding number shown on the menu.

If the spiral pattern is selected, the user is given a further menu as shown in Screen #15-3C. The spiral selections include, for example, a slow-speed spiral, a medium-speed spiral, a fast spiral, a multi-color spiral, and a repeating spiral. The terms slow, medium and fast refer to the speed at which the spiral is drawn and/or undrawn on the display of the computer terminal or slave terminal. A typical spiral pattern, for example, is the pattern 179 shown in Fig. 10. Display of the graphical pattern 179 is interrupted and execution returns to the calling program when the user presses the space bar of the computer terminal or slave terminal. As noted above, the user can also return to the main menu of Fig. 6 displayed in step 97 of Fig. 5 by pressing the return key.

In view of the above, a computerized system and method has been described for increasing the mind's thought triggering and amplification. By permitting communication between various levels of awareness, selected thoughts are externalized thereby facilitating access to and use of a greater portion of the human capacities. Successively higher levels of concentration and awareness are accessed after continued and repetitive use of the system, for example, at a particular time every day. By removing subliminal blocks preventing access to the deeper levels of the mind, learning and creativity are enhanced and a person's problem-solving and decision-making ability is improved. A person's overall psychological health is improved.

0193816

APPENDIX
BREAKTHROUGH™ SCREENS

SCREEN #1

***********************************************************

*B R E A K T H R O U G H
(Version 11)

By
PROFIT TECHNOLOGY INC.

* Trademark of Profit Technology Inc.

Please press the SPACEBAR for Monochrome display, or
Please press the "ESCAPE" key for COLOR display

***********************************************************

SCREEN #2

*********************************************************

- - - WELCOME TO THE BREAKTHROUGH WORLD! - - -

I AM YOUR ELECTRONIC HELPER.
I LOOK FORWARD TO SERVING YOU
IN YOUR EXCITING ADVENTURE OF NEW
BREAKTHROUGHS AND ACHIEVEMENTS

If this is your first time using the
program, please enter your FIRST name below

____________________________________

Please press the SPACEBAR to continue

*********************************************************

SCREEN #3

************************************************************

DEAR___(First Name of User)____,
YOU HAVE AT YOUR COMMAND ONE OF THE MOST
POWERFUL AND MOST VERSATILE PROBLEM SOLVING
PROGRAMS AVAILABLE.

IT WILL HELP YOU MAXIMIZE YOUR OPPORTUNITIES,
INCREASE YOUR SUCCESS AND GIVE YOU NEW WAYS OF
GAINING MORE TIME AND ENERGY TO PURSUE YOUR
BUSINESS, PERSONAL AND EDUCATIONAL OBJECTIVES.

Please press the SPACEBAR to continue

************************************************************

SCREEN #4

**********************************************************

____(First Name of User)____,
TO ACHIEVE MAXIMUM BENEFITS, PLEASE
REFLECT ON THE NATURE OF YOUR
CHALLENGE. SPECIFICALLY, PLEASE
TYPE IN BELOW WHAT YOU WOULD LIKE
TO SOLVE NOW.

WHAT IS YOUR CHALLENGE OR QUESTION?

____________________________________________

If you would like to review the steps on basic
problem solving techniques, PLEASE PRESS THE
"S" KEY. Otherwise, PLEASE PRESS THE SPACEBAR
to continue

**********************************************************

SCREEN #5

************************************************************

_____(First Name of User)______
ALSO, PLEASE TYPE IN THE FILE NAME THAT
YOU WOULD LIKE TO USE, TOGETHER
WITH TODAY'S DATE -

File Name----------------------------

Date________________________________

Please press the SPACEBAR to continue

************************************************************

0193816

SCREEN #6

************************************************************

Dear____(First Name of User)______

Listed below are your Main Menu Options

| KEY | OPTIONS |
|---|---|
| RETURN | RETURN To Menu |
| Q | Your QUESTION |
| A | Your ANSWER |
| S | STORE |
| P | PRINT |
| H | HELP |
| E | EDIT |
| X | EXIT |
| T | Problem Solving TECHNIQUES |
| F-1 | RELAXATION (Level 1) |
| F-2 | RELAXATION (Level 2) |
| F-5 | CONFIDENCE OF SUCCESS, (Level 1) |
| F-6 | CONFIDENCE OF SUCCESS, (Level 2) |
| F-7 | CONFIDENCE OF SUCCESS, (Level 3) |

Please press your SELECTION KEY to continue

************************************************************

SCREEN #7

*************************************************************

DEAR___(First Name of User)_____
THE KEY TO THE BEST BREAKTHROUGH
RESULTS IS TO COMBINE AS MANY THOUGHT TRIGGERS
(MUSIC, COLOR IMAGES, AMBIANCE,
CLOTHING, ETC.) AS POSSIBLE. THIS WILL
GREATLY ENHANCE YOUR CONCENTRATION,
CREATIVE DYNAMICS, AND YOUR PROBLEM
SOLVING CAPACITY.

Please press the SPACEBAR to continue

*************************************************************

0193816

SCREEN #8

************************************************************

Dear____(First Name of User)____
as you are powering up the various
breakthrough triggers, please take
note of your thoughts. Sometimes
the answer will surface to the top
even before all the triggers are
engaged.

When you have all the applicable
triggers energized, you are ready
for your breakthroughs.

Now, ____(First Name of User)____,

| PLEASE ENERGIZE THE MULTIPLE TRIGGERS AS SHOWN ON THE FOLLOWING SCREENS: |
|---|

Please press the SPACEBAR to continue

************************************************************

SCREEN #9

************************************************************

Trigger 1: NO INTERRUPTIONS

___(First Name of User)_____
your breakthrough experience
is a very special time for you.

To be most successful

| |
|---|
| PLEASE BE CERTAIN THAT YOU ARE<br>NOT DISTURBED BY TELEPHONES,<br>NOISES, ETC. |

Please press the SPACEBAR to continue

************************************************************

0193816

SCREEN #10

*************************************************************

Trigger 2: BREAKTHROUGH MUSIC

___(First Name of User)______
Breakthrough music has the power to reduce tension, strain and boredom. It will energize you and help you breakthrough the barriers. It will heighten your creativity, amplify insight and help you make fuller use of your capacities.

| |
|---|
| Now,___(First Name of User)______,<br>PLEASE TURN ON THE BREAKTHROUGH MUSIC |

Please press the SPACEBAR to continue

*************************************************************

SCREEN #11

************************************************************

Trigger 3: BREAKTHROUGH ATTIRE

Proper breakthrough attire can help you create a feeling of relaxation, courage and success. It will help your concentration, confidence and mobilize your energies for greater creativity and power.

Each time you use the breakthrough clothing you will set up new triggering links between the various circuits of your brain. This will greatly enhance your effectiveness.

___(First name of User)___,
PLEASE PUT ON YOUR BREAKTHROUGH CLOTHING!

Please press the SPACEBAR to continue
*************************************************************

0193816

SCREEN #12

************************************************************

Trigger 4: COLOR IMAGES

Like music and attire, color images, video-music and problem-related pictures have the power to energize you. They continually reinforce your thought triggering process, creative dynamics and achievements.

They will help you develop new skills, enhance your learning ability and push back limitations.

| PLEASE TURN ON YOUR COLOR IMAGES |
|---|

Please press the SPACEBAR to continue

************************************************************

SCREEN #13

************************************************************

Trigger 5:

FRAGRANCE AND COLOR GENERATOR

The energy of rhythm, ambiance,
beautiful fragrance and color can add
vital dimensions to your well being
and breakthrough success.

They will trigger more fully the
entire field of your senses.
They will activate more completely
the unique powers of your mind.

---

___(First name of User)___,
PLEASE ACTIVATE YOUR FRAGRANCE
AND COLOR GENERATOR

---

Please press the SPACEBAR to continue

************************************************************

SCREEN #14

*************************************************************

Trigger 6:
CLEAR YOUR SUPERCOMPUTER

To start a new computation in a calculator or a computer we first must clear the memory. To be able to solve your challenge most effectively you also have to clear your memory.

RELAX

UNWIND

RECHARGE

For more complete relaxation exercises please PRESS ONE of the Function Keys:

LEVEL 1........F1
LEVEL 2........F2

Or

Please press the SPACEBAR to continue

*************************************************************

SCREEN #14-1A

************************************************************

RELAXATION EXERCISE: LEVEL 1

To recharge yourself - to clear your supercomputer and refresh yourself from daily pressures and stresses, in addition to rest, which gives the body a chance to get rid of the metabolic wastes (carbon dioxide, lactic acid, etc.) and restore muscle fuel, try this relaxation exercise:

Please press the SPACEBAR to continue

************************************************************

SCREEN #14-1B

************************************************************

___(First name of user)____,

---

CLOSE YOUR EYES FOR A MINUTE OR TWO -

RELAX

UNWIND

RECHARGE

LAY ASIDE ALL YOUR BUSINESS
AND PERSONAL CARES

---

Please press the SPACEBAR to continue

************************************************************

SCREEN #14-1C

**********************************************************

CONSCIOUSLY RELAX YOUR:

FEET

LEGS

CHEST

SHOULDER BLADES AND BACK

Please press the SPACEBAR to continue

**********************************************************

0193816

SCREEN #14-1D

*****************************************************************

---

ALSO RELAX YOUR:

ARMS

NECK

EYES AND HEAD

RELAX YOUR ENTIRE BODY SO THAT
YOU FEEL TOTALLY AT REST

---

Please press the SPACEBAR to continue

*****************************************************************

0193816

SCREEN #14-1E

************************************************************

____(First name of user)____,
Repeat to yourself over and over again...

---

"I AM RELAXING...

I AM RECHARGING...

I AM ENERGIZING...

Think about an event which you enjoyed
or about something that made you
very happy.

FEEL THE ENERGY OF THAT MOMENT
FLOODING YOUR ENTIRE BEING!

Stay with it for a few minutes.

---

Please press the SPACEBAR to continue

************************************************************

SCREEN #14-1F

************************************************************

Now that you are relaxed,___(First Name of User)___,

---

QUIETLY FOCUS YOUR ATTENTION ON YOUR BREATHING

Instead of breathing rapidly and
taking in little air -

BREATH IN DEEPLY...

FILL YOUR LUNGS FULLY...

SLOWLY AND EVENLY...

TRY NOT TO PAUSE.

---

Please press the SPACEBAR to continue

************************************************************

0193816

SCREEN #14-1G

************************************************************

Count as you inhale and exhale.
The time you spend exhaling should
be about the same time spent inhaling.

---

For example, if you have slowly counted
to five while inhaling, then count
slowly to five while exhaling.

---

Breathe evenly, deeply and slowly.
Recharge...Renew...Revatilize...

Feel a happy exhuberance within.

---

Please press the SPACEBAR to continue with Trigger #7; or

Please press the F2 key for Relaxation Exercises Level 2

**************************************************************

SCREEN #14-2A

************************************************************

RELAXATION EXERCISE: Level 2

THE VERY BEST OF THE VERY BEST

A more powerful relaxation exercise and
creativity-training technique is to
concentrate your attention on relaxation:

Please press the SPACEBAR to continue

************************************************************

SCREEN #14-2B

************************************************************

___(First name of user)____,

---

CLOSE YOUR EYES FOR A MINUTE OR TWO -

RELAX

UNWIND

RECHARGE

LAY ASIDE ALL YOUR BUSINESS
AND PERSONAL CARES

---

Please press the SPACEBAR to continue

************************************************************

SCREEN #14-2C

************************************************************

CONSCIOUSLY RELAX YOUR;

FEET

LEGS

CHEST

SHOULDER BLADES AND BACK

Please press the SPACEBAR to continue

************************************************************

SCREEN #14-2D

************************************************************

---

ALSO RELAX YOUR:

ARMS

NECK

EYES AND HEAD

RELAX YOUR ENTIRE BODY SO THAT
YOU FEEL TOTALLY AT REST

---

Please press the SPACEBAR to continue

************************************************************

SCREEN #14-2E

**************************************************************

___(First name of user)_____,
repeat to yourself over and over again...

---

"I AM RELAXING...

I AM RECHARGING...

I AM ENERGIZING..."

Think about an event which you enjoyed
or about something that made you
very happy.

FEEL THE ENERGY OF THAT MOMENT
FLOODING YOUR ENTIRE BEING!

---

Please press the SPACEBAR to continue

**************************************************************

36bd-ldp

SCREEN #14-2F

*************************************************************

Now that you are relaxed,___(First Name of User)____,

---

STILL YOUR MIND LIKE QUIET WATER

FOCUS ON THAT DEEP RESEVOIR
OF ENERGY

STAY WITH THAT FEELING

---

When your mind begins to wander,
slowly steer it back on course

Please press the SPACEBAR to continue

*************************************************************

0193816

SCREEN #14-2G

*****************************************************************

Dear____(First Name of User____,
your mind, like your legs, hands
or fingers, is subject to your will

---

GENTLY HUSH IT; GENTLY TAME IT;

GENTLY HARNESS IT.

P-R-O-L-O-N-G THAT GOOD FEELING!

---

Practice this creativity training exercise
until your attention span on PEACE-OF-MIND
lengthens to about 10 minutes

Please press the SPACEBAR to continue with trigger #7

*****************************************************************

SCREEN #15

************************************************************

Trigger 7: CONFIDENCE OF SUCCESS

The confidence of success helps you solve problems. Specifically, the confidence - - belief and knowledge in the fact that you already have solved the problem activates your brain's neurotransmitters that you have the answers.

---

BE POSITIVE OF YOUR ACHIEVEMENTS!

BE CONFIDENT OF YOUR SUCCESS!

---

For reinforcement of success

Please PRESS ONE of the Function Keys:

| | |
|---|---|
| LEVEL 1 | F5 |
| LEVEL 2 | F6 |
| LEVEL 3 | F7 |

Or

Please press the SPACEBAR to continue

************************************************************

SCREEN #15-1A

**********************************************************

CONFIDENCE OF SUCCESS EXERCISE:
L E V E L 1

Below we have listed a number of reinforcement thoughts that will further help you trigger and amplify your best thoughts and solutions to your challenge

1. Have absolute confidence of finding the answer to your challenge

2. Know positively that you can do it

3. Visualize the successful end result

4. Trust. Have no doubt of success. Do not falter

5. Do not worry. Do not be afraid. Have courage

6. Create a strong feeling of success in your heart

7. Trust in your ability to be able to do the job

Please press the SPACEBAR to continue with Trigger #8; or

Please press the F6 key for Confidence of Success, Level 2.

************************************************************

0193816

SCREEN #15-2A

************************************************************

CONFIDENCE OF SUCCESS EXERCISE
LEVEL 2

The Confidence of Success statements shown on the following screens have been selected as affirmation examples. To make it more personal, you can type in your own statements. (For details, see Section "K" of the Breakthrough manual.)

____(First name of User)_____, when you have that feeling of confidence that you can find the answer:

Please press the SPACEBAR to continue with Trigger 8; or

Please press the F10 key for Personal Triggering Routine; or

Please press the F7 key for Confidence of Success, Level 3

*****************************************************************

36bd-ldp

SCREEN #15-2B

************************************************************

I'VE GOT IT!
I HAVE ACHIEVED BREAKTHROUGH!
I HAVE DONE IT!
FANTASTIC!
IT'S WONDERFUL!
I AM SO HAPPY!
I LOVE MYSELF!
WHAT A SUCCESS!
I HAVE DONE IT!
EUREKA! EUREKA!
INCREDIBLE!
I AM SO HAPPY!
I AM TRULY HAPPY!
SUCCESS! SUCCESS! EVERYWHERE!
WOW! IT REALLY WORKS FAST!
I HAVE DONE IT!
SUPER!
MY HEART IS FULL OF JOY!
EUREKA!
IT'S TRULY MAGNIFICENT!
EXTRAORDINARY!
I HAVE THE ANSWERS!
SUCCESS IS MINE!
INGENIOUS!

Press the SPACEBAR to continue

************************************************************

0193816

SCREEN #15-3A

*****************************************************************

CONFIDENCE OF SUCCESS EXERCISE LEVEL 3

____(First Name of User)____,
on the following screens you will
see a number of reinforcements of
Confidence of Success triggers.

---

Keep observing the screen outputs
until you are ready to go to
Trigger level 8.

To create your own personal triggering
format, please see the Breakthrough
manual.

---

Please press the SPACEBAR to continue; or

Please press the F10 key for
Personal Triggering Format

*****************************************************************

SCREEN #15-3B

*************************************************************

____(First Name of User)____,
The graphics listed below will further help you to trigger and amplify the best answers and solutions to your challenge. They will help you reach the breakthrough level 3.

1. RANDOM PATTERS - SLOW
2. RANDOM PATTERN - MEDIUM
3. RANDOM PATTERN - FAST
4. MOIRE PATTERN
5. SPIRAL PATTERN
6. PULSING PATTERN - SLOW
7. PULSING PATTERN - FAST

Please Choose A Selection And PRESS A NUMBER KEY to Continue

*************************************************************

SCREEN #15-3C

************************************************************

____(First Name of User)____,
A number of spirals are availble.

1. SLOW SPIRAL
2. MEDIUM SPEED SPIRAL
3. FAST SPIRAL
4. MULTI COLOR SPIRAL
5. REPEATING SPIRAL

Please press the NUMBER KEY of the spiral selected

************************************************************

SCREEN #16

*************************************************************

Trigger 8: YOUR OWN QUESTIONS

One has to be very specific in addressing computer memory location - - the same is true when addressing human memory locations.

Your own questions can address and trigger your memory circuits that have partial or complete answers.

Dear ____(First Name of User)____,
because the question part of the Breakthrough is crucial to your solution,

---

PLEASE PAUSE FOR ONE MINUTE AND REFLECT ON THE NATURE OF YOUR QUESTION. THEN PLEASE TYPE IN ALL THE THINGS THAT COME TO YOUR MIND ABOUT YOUR CHALLENCE OR QUESTION.

---

Please press the SPACEBAR to continue

*************************************************************

SCREEN #16A

*************************************************************

YOUR OWN QUESTIONS:

Please include as much detail as you can

____(First Name of User)____,
please include as much details as you can remember. Consider as many ramifications as possible. Use as many screens as you require.

---

Please type below:

Please press the SPACEBAR to continue your QUESTION
Please press the "A" key for your ANSWER, or
Please press H-16 for Question HELP

*************************************************************

SCREEN #16B

************************************************************

YOUR OWN QUESTIONS:

Will help you solve your challenge

---

Please type below:

---

Please press the SPACEBAR to continue your QUESTION
Please press the "A" key for your ANSWER, or
Please press H16 for Question HELP

************************************************************

0193816

SCREEN #17

***********************************************************

Trigger 9 - YOUR ANSWERS

Answers come in two forms:
(a) complete, and (b) partial.

The more inputs you can provide to the definition of the problem the more encompassing and complete will be your answers.

The important thing is to start putting down your answers, no matter how seemingly insignificant.

NOTE: Your answers will trigger other answers. Once the flow of thoughts get going, do not interrupt. It is like Love - - stay with it

As you become more proficient with your answers, you will be building new neurotransmitting circuits in you brain. You will be solving your problems faster and easier.

Please press the SPACEBAR to continue

***********************************************************

0193816

SCREEN #17A

************************************************************

YOUR ANSWERS

(The journey of a thousand miles
begins with but a single step)

---

Please type below

Please press the SPACEBAR for more Answers, or
Please press the "T" key for TAKE ACTION

************************************************************

SCREEN 17B

*************************************************************

YOUR ANSWERS

Ideas are a capital that
bears interest in the
hands of talent

---

Please type below:

---

Please press the SPACEBAR for more Answers, or
Please press the "T" key for TAKE ACTION

*************************************************************

0193816

SCREEN #18

*************************************************************

TAKE ACTION

To maximize the value of
your thoughts:

1. Convert the solution into action

2. Follow it through

Please press the SPACEBAR to continue

*************************************************************

0193816

SCREEN #19

*************************************************************

CONGRATULATIONS ____(First Name of User)___,

ON COMPLETING YOUR EXCITING ADVENTURE

OF NEW BREAKTHROUGHS AND ACHIEVEMENTS.

I AM LOOKING FORWARD TO OUR NEXT

PROBLEM SOLVING EXPERIENCE.

WELL DONE!

Please press the SPACEBAR to exit the program

*************************************************************

36bd-ldp

We claim as our invention:

1. A system comprising, in combination,

means for generating a set of triggering actions to a plurality of senses for bringing the user to an enhanced state of awareness including a high level of concentration in which said user is receptive to unstructured inputs and outputs for finding solutions to problems, and

means for defining an environment conducive to said high level of concentration.

2. The system as claimed in claim 1, further comprising means for defining said unstructured inputs and outputs including means for requesting, receiving and recording a question from a user, and means for requesting, receiving, and recording a corresponding response from the user.

3. The system as claimed in claim 1, wherein said set of triggering actions utilize rhythm and images.

4. The system as claimed in claim 1, wherein said set of triggering actions utilize rhythm, images, sound, repetition, and touching a computer keyboard.

5. The system as claimed in claim 1, wherein said means for defining said environment include a high-fidelity sound system.

6. The system as claimed in claim 1, wherein said means for defining said environment include an image projector.

7. The system as claimed in claim 1, wherein said means for defining said environment include a color generator.

8. The system as claimed in claim 1, wherein said means for defining said environment include a fragrance generator.

9. The system as claimed in claim 1, wherein said means for defining said environment include a temperature controller.

10. The system as claimed in claim 1, wherein said environment includes a particular location where said system is frequently used by said user.

11. A system comprising, in combination,

a computer executing a predefined control procedure for

generating a sequence of predetermined triggering actions for bringing the mind of the user to an enhanced state of concentration and awareness for finding solutions to problems,

presenting requests for questions and responses to said user, and

receiving and recording questions and responses of the user to said requests for questions and responses, and

means for defining an environment conducive to said high level of mental concentration.

12. The system as claimed in claim 11, wherein said means for defining said environment are in part controlled by said computer.

13. The system as claimed in claim 11, wherein said computer includes a video display and said triggering actions includes a periodically changing graphical pattern.

14. The system as claimed in claim 13, further comprising a sound generator synchronized to said periodically changing graphical pattern.

15. The system as claimed in claim 11, wherein said computer includes a raster-scanned video display and a keyboard for presenting said requests for questions and responses to said user and receiving said questions and responses from said user.

16. The system as claimed in claim 15, further comprising a sound generator synchronized to the raster-scanning of said video display.

17. The system as claimed in claim 11, wherein said means for defining said environment include a high-fidelity sound system for playing prerecorded music to said user.

18. The system as claimed in claim 17, wherein said prerecorded music has a beat of 55-65 beats to the minute.

19. The system as claimed in claim 11, wherein said means for defining said environment include a color generator.

20. The system as claimed in claim 11, wherein said means for defining said environment include a fragrance generator.

21. A method of finding and externalizing thoughts of a user including the steps of

(1) establishing a predetermined environment for said user conducive to finding and externalizing thoughts of said user, and

(2) operating a general-purpose digital computer including a memory to

(a) generate a predetermined sequence of triggering actions presented to said user when said user is in said environment, said sequence of triggering actions bringing said user to an enhanced state of awareness including a high level of mental concentration in which said user is receptive to a predetermined request for a question and a corresponding response for finding and externalizing thoughts of said user,

(b) present said predetermined request for a question and response to said user, and(c) receive and record in said memory the question and response of said user to said predetermined request for a question and response.

22. The method as claimed in claim 21, further comprising a step (2)(d) performed before steps (2)(b) and (2)(c) of operating said general-purpose digital computer to request said user to specify a particular subject area for selecting the thoughts to be found and externalized.

23. The method as claimed in claim 22, wherein step (2)(d) further comprises receiving and recording in said memory the subject area specified by said user.

24. The method as claimed in claim 21, further comprising a step (2)(e) performed after steps (2)(b) and (2)(c) of operating said general-purpose digital computer to receive an indication from said user of whether said question and response recorded in said memory should be erased, and in response to said indication selectively erasing said question and response recorded in said memory.

25. The method as claimed in claim 21, further comprising a step (2)(f) performed before steps (2)(b) and (2)(c) of operating said general-purpose digital computer to give an explanation to assure said user that said user has control over said computer.

26. The method as claimed in claim 21, further comprising a step (2)(g) of operating said general-purpose digital computer to give said user authorization to access the user's inner self.

27. The method as claimed in claim 21, wherein said step (2)(a) of operating said general-purpose digital computer to generate a predetermined set of triggering actions excites a plurality of the user's senses.

36bd-ldp

28. The method as claimed in claim 27, wherein said set of triggering actions include presenting to the user a periodically changing graphical pattern.

29. The method as claimed in claim 28, wherein said set of triggering actions further includes presenting to the user a time-variant audio signal which periodically changes in synchronism with said periodically changing graphical pattern.

30. The method as claimed in claim 27, wherein said set of triggering actions include presenting to said user a raster-scanned video display.

31. The method as claimed in claim 30, wherein said set of triggering actions further includes presenting to said user a time-variant audio signal which periodically changes in synchronism with the raster-scanning of said video display.

32. The method as claimed in claim 21, wherein said step (1) of establishing a predetermined environment for said user includes operating a high-fidelity sound system to present a prerecorded audio signal to the user.

33. The method as claimed in claim 32, wherein the prerecorded audio signal is classical music.

34. The method as claimed in claim 21, wherein said step (1) of establishing a predetermined environment for said user includes adjusting a color generator to a selected color for presentation to the user.

35. The method as claimed in claim 21, wherein said step (1) of establishing a predetermined environment for said user includes adjusting a fragrance generator to a selected fragrance for presentation to the user.

36. The method as claimed in claim 21, wherein said step (1) of establishing a predetermined environment for said user includes said user establishing certain breathing patterns.

37. The method as claimed in claim 21, wherein said step (1) of establishing a predetermined environment for said user includes said user wearing certain clothing.

38. The method as claimed in claim 21, wherein said step (1) of establishing a predetermined environment for said user includes establishing a social environment having at least one person in addition to said user.

39. A method of operating a general-purpose digital computer having a memory, an input unit and an output unit, for finding and externalizing thoughts of a user comprising the steps of:

(a) operating said output unit to give a presentation to said user tending to induce an enhanced state of awareness in said user in which said user is receptive to predetermined requests for questions and responses for finding and externalizing thoughts of said user,

(b) operating said output unit to present said predetermined requests for questions and responses to said user,

(c) operating said input unit and said memory to receive and record in said memory the questions and responses of said user to said predetermined requests for questions and answers, and

(d) operating said input unit to receive an indication from said user as to whether said questions and responses recorded in said memory should be erased, and in response to said indication selectively operating said memory to selectively erase said questions and responses recorded in said memory.

36bd-ldp

40. The method as claimed in claim 39, wherein step (a) includes presenting relaxation techniques to said user.

41. The method as claimed in claim 39, wherein step (a) includes presenting confidence of success exercises to said user.

0193816

1/10

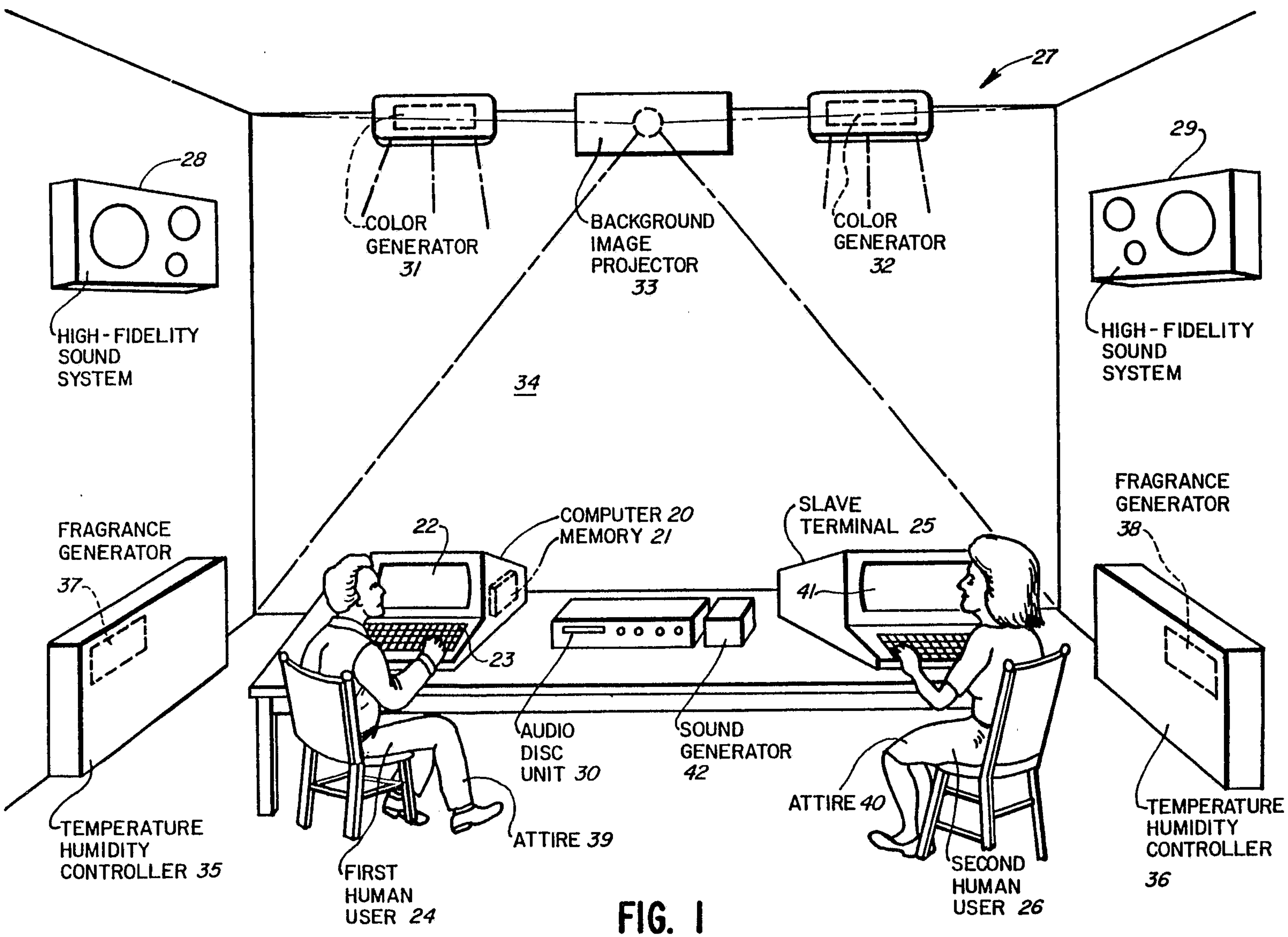


FIG. 1

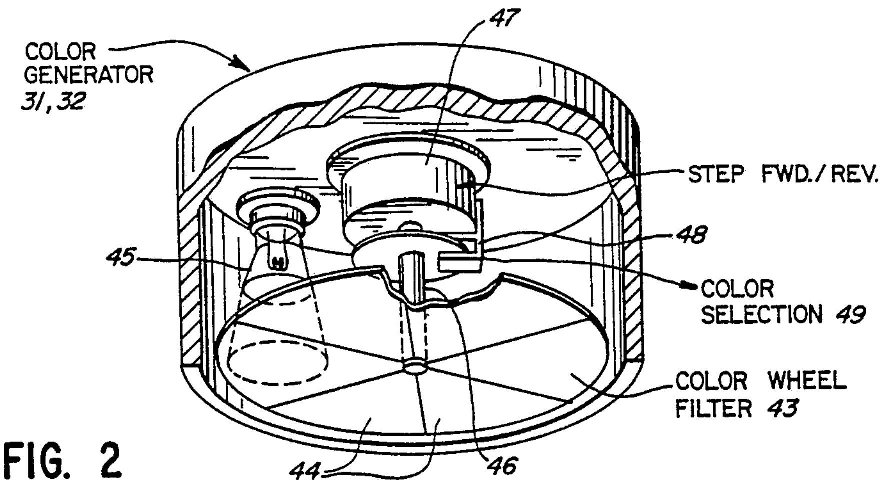
COLOR GENERATOR 31, 32
47
STEP FWD./REV.
48
45
COLOR SELECTION 49
COLOR WHEEL FILTER 43
44
46

FIG. 2

FIG. 3

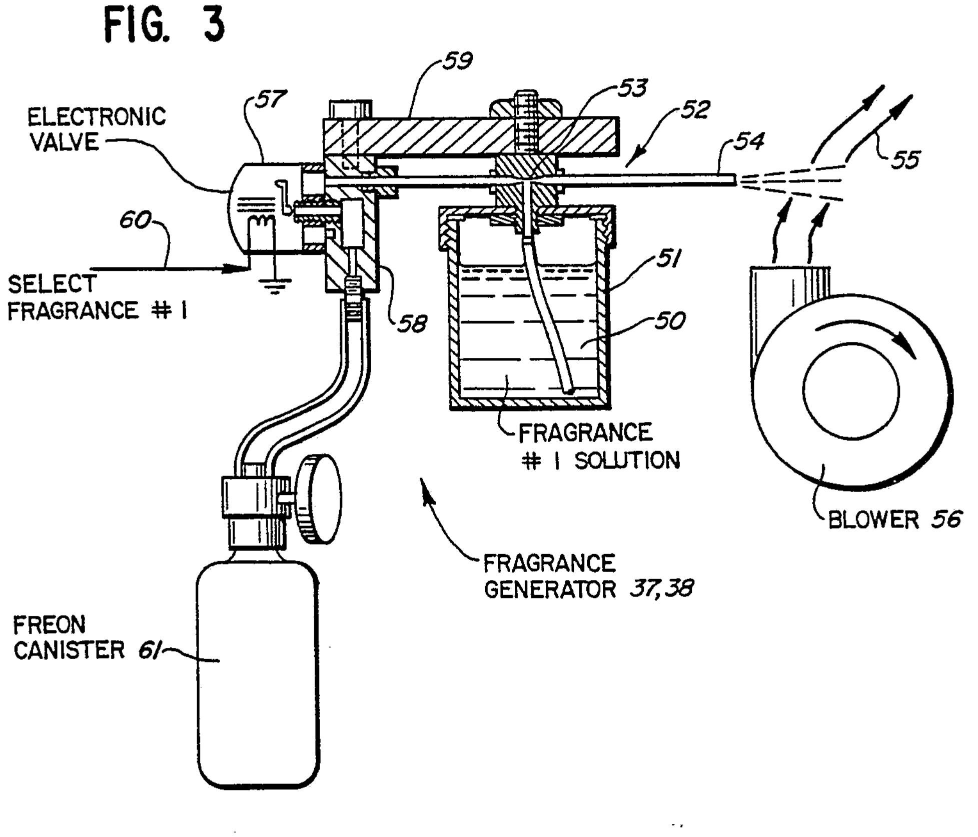
59
53
52
54
55
ELECTRONIC VALVE
57
60
SELECT FRAGRANCE # 1
58
51
50
FRAGRANCE # 1 SOLUTION
BLOWER 56
FRAGRANCE GENERATOR 37,38
FREON CANISTER 61

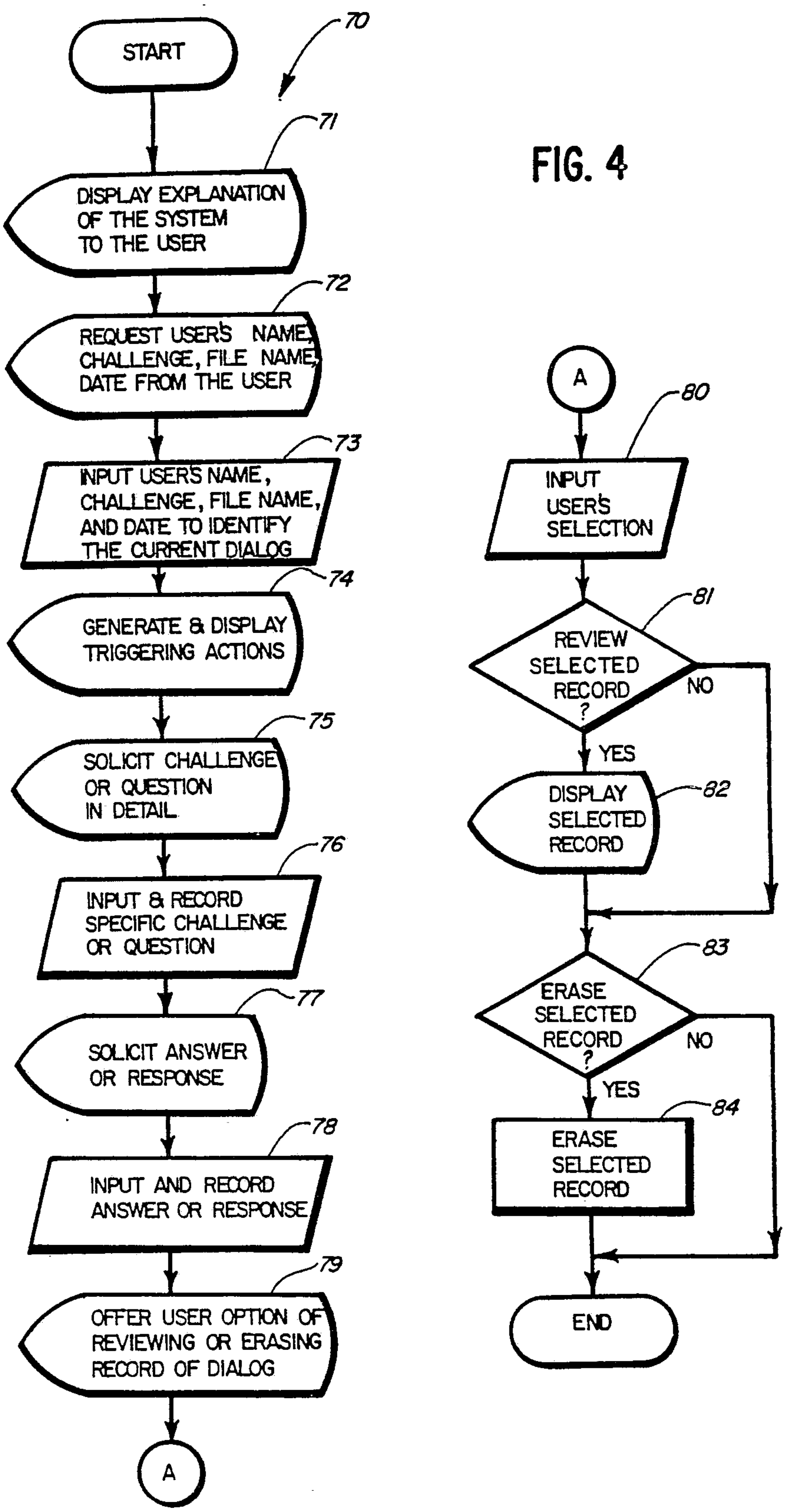
70
START
71
DISPLAY EXPLANATION OF THE SYSTEM TO THE USER
72
REQUEST USER'S NAME, CHALLENGE, FILE NAME, DATE FROM THE USER
73
INPUT USER'S NAME, CHALLENGE, FILE NAME, AND DATE TO IDENTIFY THE CURRENT DIALOG
74
GENERATE & DISPLAY TRIGGERING ACTIONS
75
SOLICIT CHALLENGE OR QUESTION IN DETAIL
76
INPUT & RECORD SPECIFIC CHALLENGE OR QUESTION
77
SOLICIT ANSWER OR RESPONSE
78
INPUT AND RECORD ANSWER OR RESPONSE
79
OFFER USER OPTION OF REVIEWING OR ERASING RECORD OF DIALOG
A
A
80
INPUT USER'S SELECTION
81
REVIEW SELECTED RECORD ?
NO
YES
82
DISPLAY SELECTED RECORD
83
ERASE SELECTED RECORD ?
NO
YES
84
ERASE SELECTED RECORD
END

FIG. 4

FIG. 5

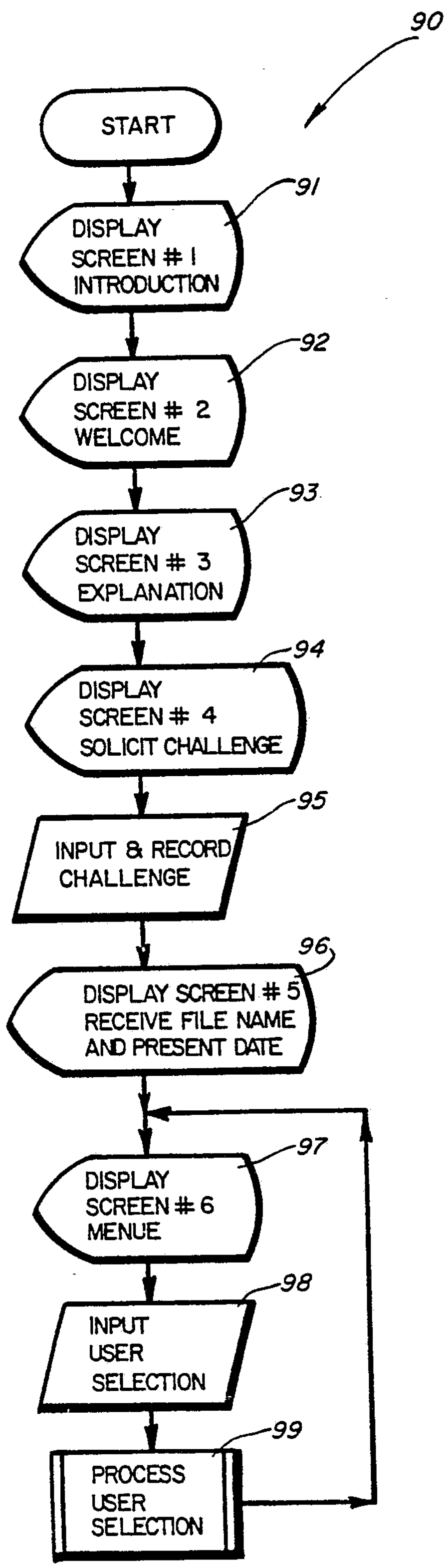
90
START
91
DISPLAY
SCREEN # 1
INTRODUCTION
92
DISPLAY
SCREEN # 2
WELCOME
93
DISPLAY
SCREEN # 3
EXPLANATION
94
DISPLAY
SCREEN # 4
SOLICIT CHALLENGE
95
INPUT & RECORD
CHALLENGE
96
DISPLAY SCREEN # 5
RECEIVE FILE NAME
AND PRESENT DATE
97
DISPLAY
SCREEN # 6
MENUE
98
INPUT
USER
SELECTION
99
PROCESS
USER
SELECTION

FIG. 6

DEAR (FIRST NAME OF USER) _____ (B) __________

LISTED BELOW ARE YOUR MAIN MENU OPTIONS

| KEY | OPTIONS |
|---|---|
| RETURN | RETURN TO MENU |
| Q | YOUR QUESTION |
| A | YOUR ANSWER |
| S | STORE |
| P | PRINT |
| H | HELP |
| E | EDIT |
| X | EXIT |
| T | PROBLEM SOLVING TECHNIQUES |
| F-1 | RELAXATION (LEVEL 1) |
| F-2 | RELAXATION (LEVEL 2) |
| F-5 | CONFIDENCE OF SUCCESS, (LEVEL 1) |
| F-6 | CONFIDENCE OF SUCCESS, (LEVEL 2) |
| F-7 | CONFIDENCE OF SUCCESS, (LEVEL 3) |

PLEASE PRESS YOUR SELECTION KEY TO CONTINUE

FIG. 7A

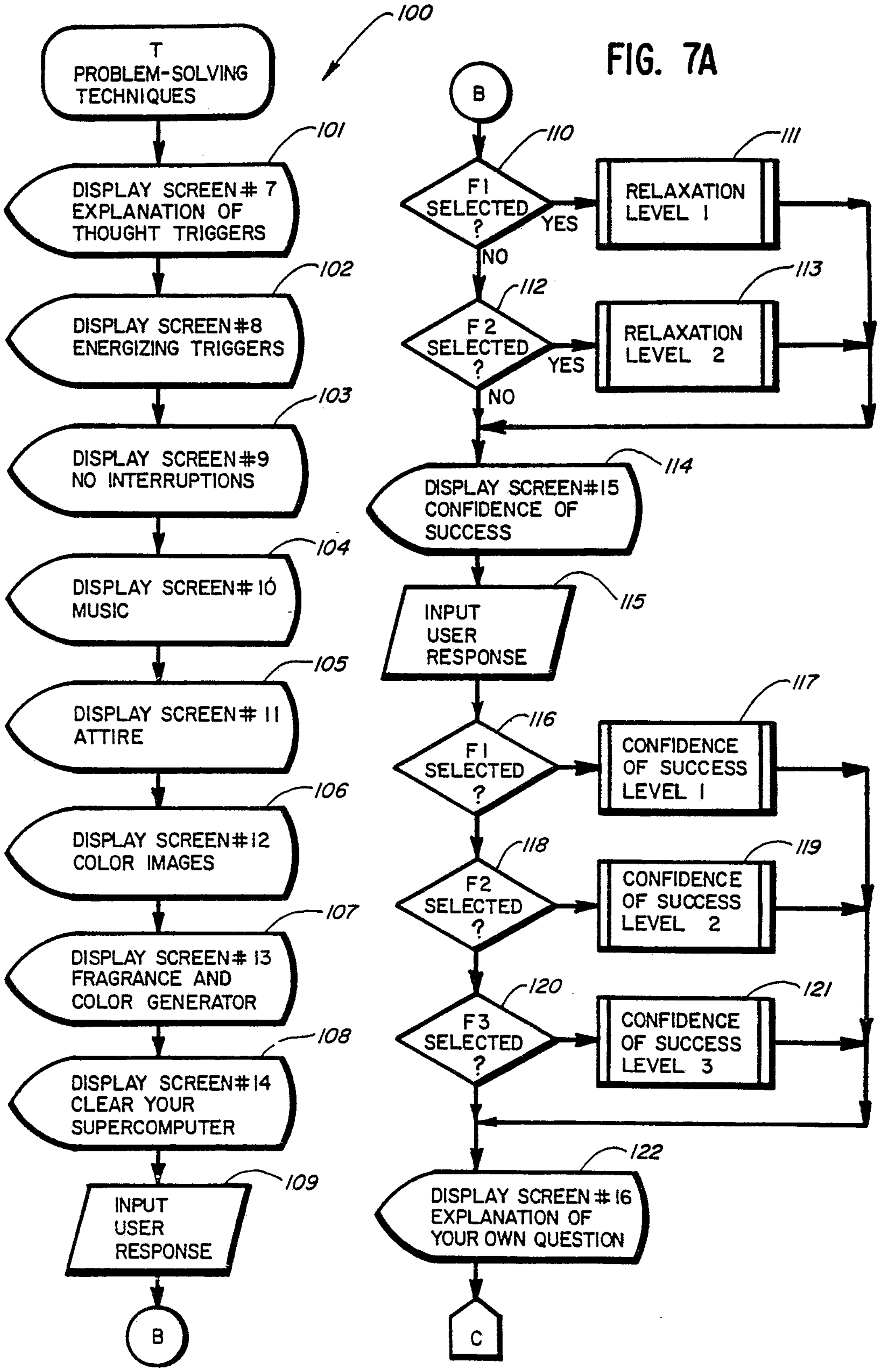
100
T PROBLEM-SOLVING TECHNIQUES
101
DISPLAY SCREEN # 7 EXPLANATION OF THOUGHT TRIGGERS
102
DISPLAY SCREEN #8 ENERGIZING TRIGGERS
103
DISPLAY SCREEN #9 NO INTERRUPTIONS
104
DISPLAY SCREEN # 10 MUSIC
105
DISPLAY SCREEN # 11 ATTIRE
106
DISPLAY SCREEN #12 COLOR IMAGES
107
DISPLAY SCREEN # 13 FRAGRANCE AND COLOR GENERATOR
108
DISPLAY SCREEN #14 CLEAR YOUR SUPERCOMPUTER
109
INPUT USER RESPONSE
B
B
110
F1 SELECTED ?
YES
NO
111
RELAXATION LEVEL 1
112
F2 SELECTED ?
YES
NO
113
RELAXATION LEVEL 2
114
DISPLAY SCREEN #15 CONFIDENCE OF SUCCESS
115
INPUT USER RESPONSE
116
F1 SELECTED ?
117
CONFIDENCE OF SUCCESS LEVEL 1
118
F2 SELECTED ?
119
CONFIDENCE OF SUCCESS LEVEL 2
120
F3 SELECTED ?
121
CONFIDENCE OF SUCCESS LEVEL 3
122
DISPLAY SCREEN # 16 EXPLANATION OF YOUR OWN QUESTION
C

0193816

7/10

M 21·02·86

15

FIG. 7B

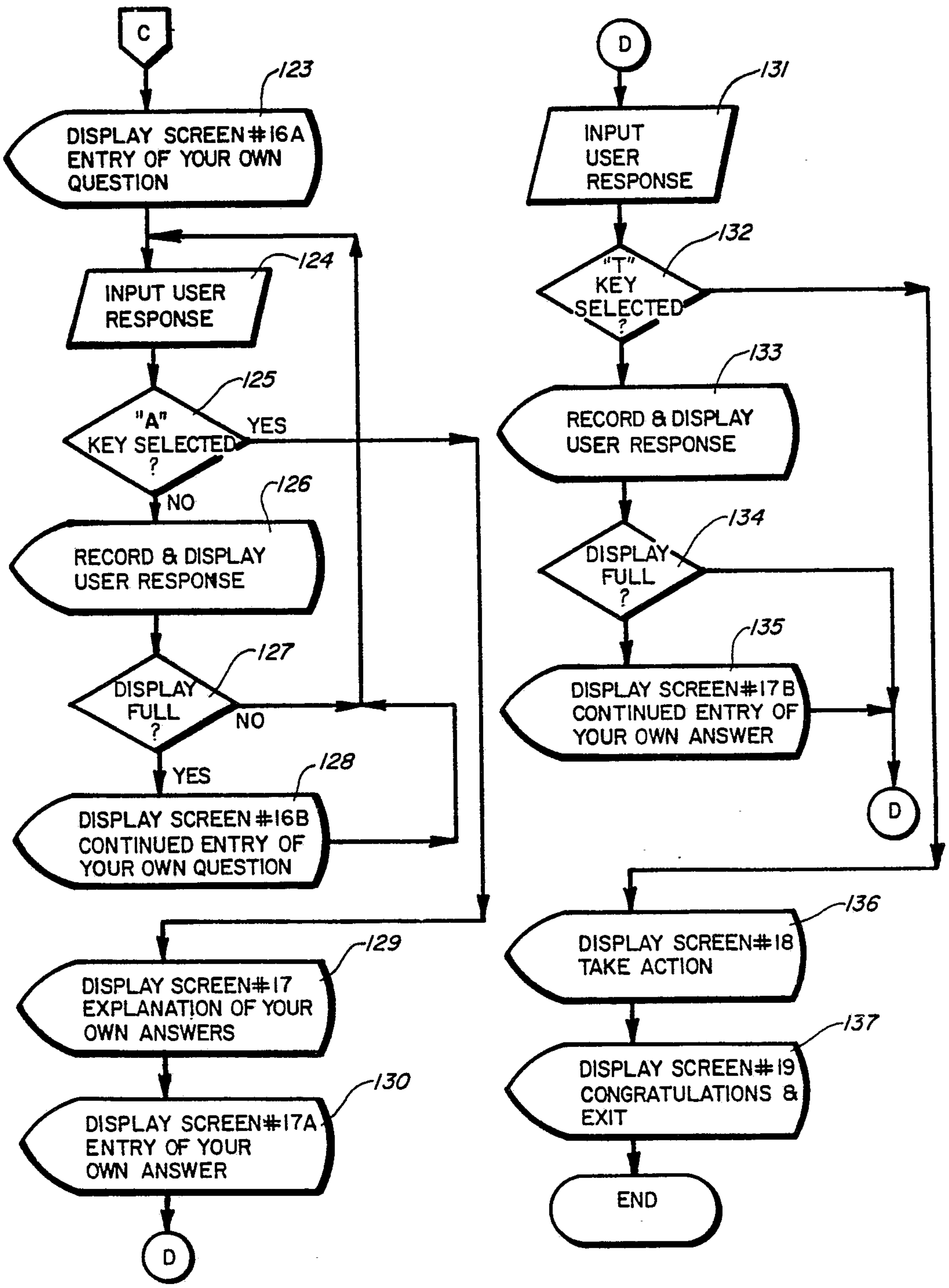

0193816

8/10

M 21.02.86

FIG. 8

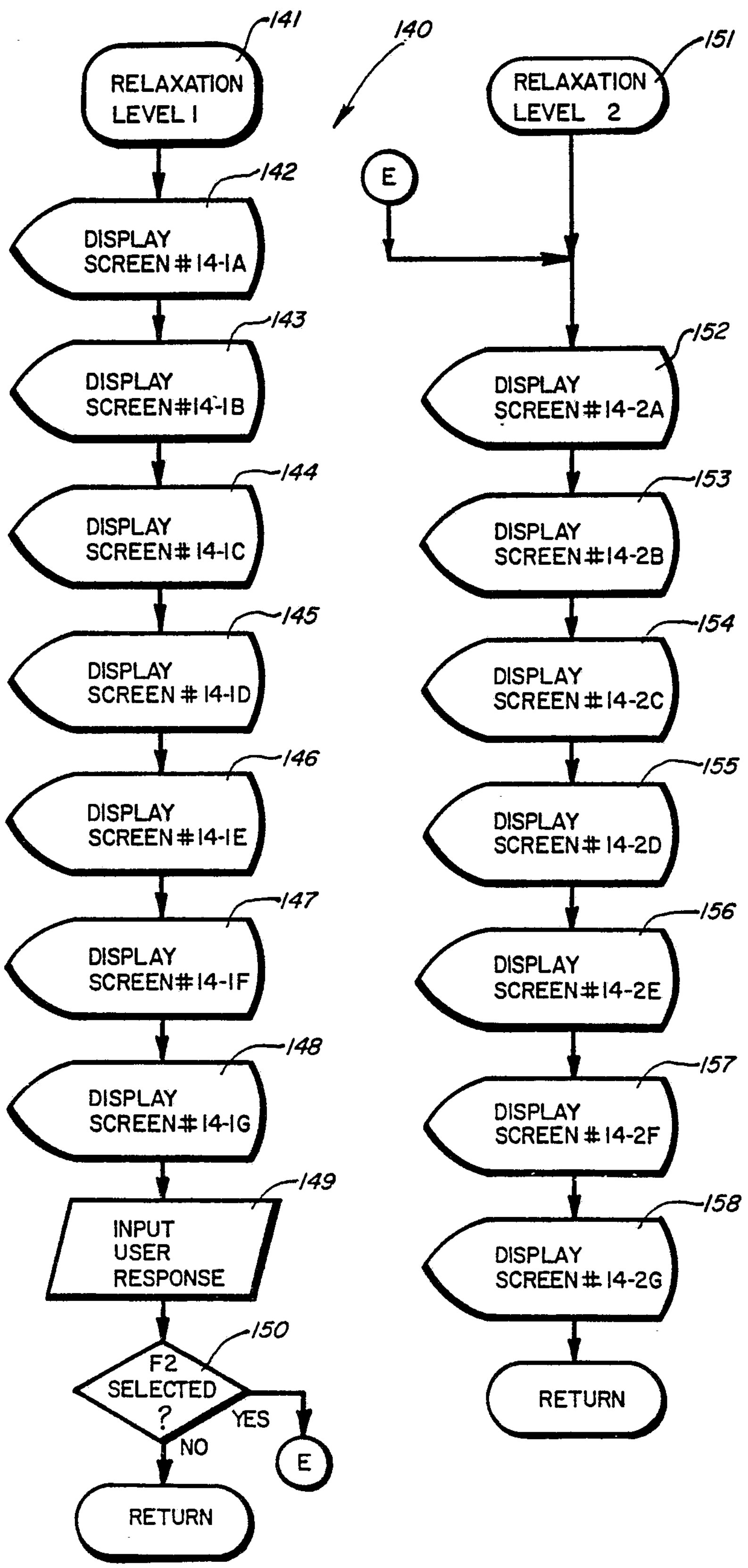

0193816

9/10 21.02.86 17

FIG. 9

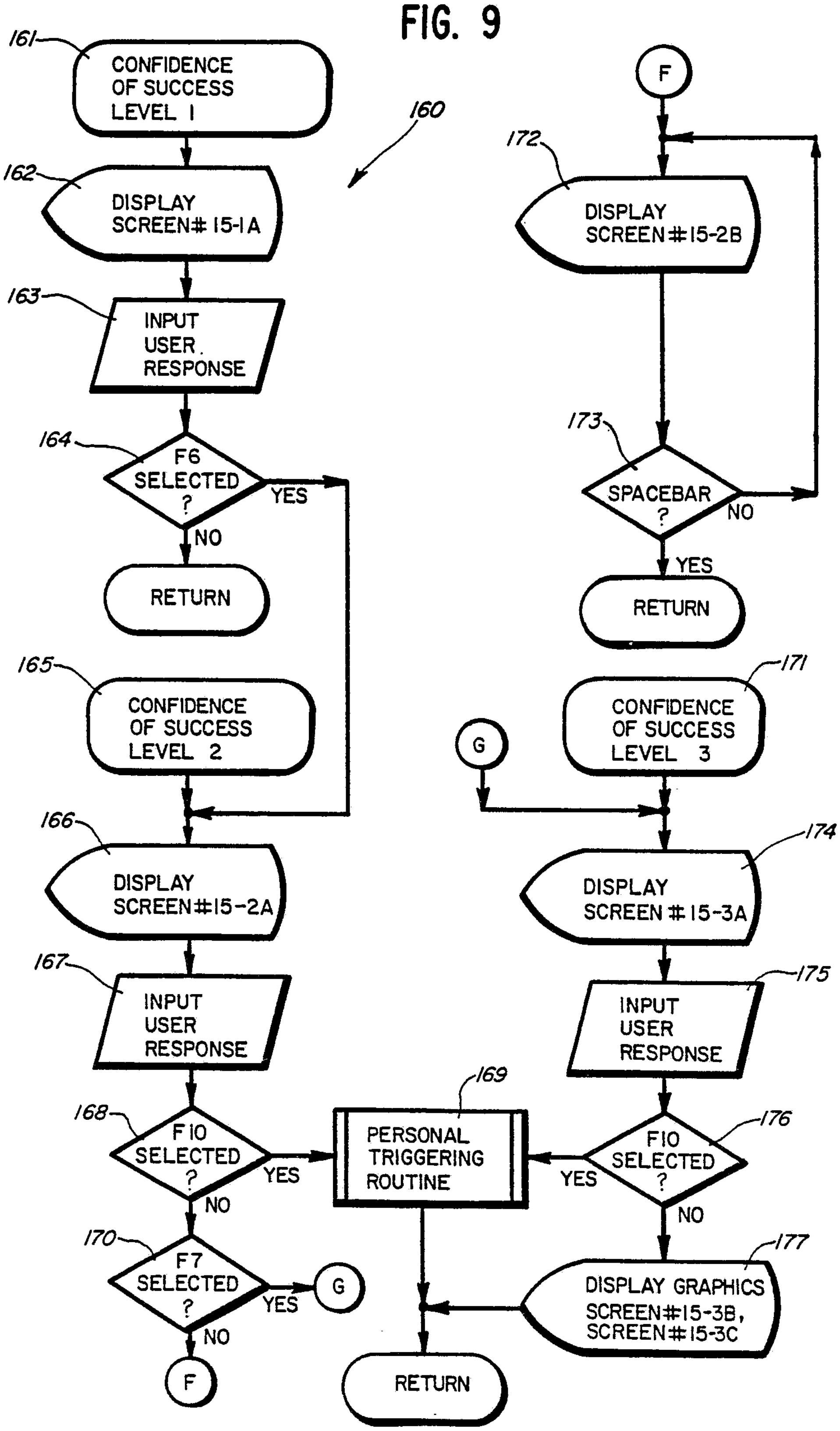

10/10 M 21·02·86

FIG. 10